# EUROPEAN PATENT SPECIFICATION

(11) **EP 1 501 147 B1**
(45) Date of publication and mention of the grant of the patent: **20.09.2006**
(21) Application number: 04017466.6
(22) Date of filing: 23.07.2004
(51) Int. Cl.: H01M 8/04

(54) **Fuel cell power generation system**
Brennstoffzellenenergiegewinnungssystem
Système de piles à combustible générateur de courant

(30) Priority: 24.07.2003 JP 2003278801
(43) Date of publication of application: 26.01.2005
(73) Proprietor: MATSUSHITA ELECTRIC INDUSTRIAL CO., LTD., Kadoma-shi, Osaka 571-8501 (JP)
(72) Inventor: Ozeki, Masataka, Izumi-shi Osaka 594-0071 (JP); Nakamura, Akinari, Katano-shi Osaka 576-0021 (JP); Tanaka, Yoshikazu, Fukakusa Fushimi-ku Kyoto-shi (JP)
(74) Representative: Leinweber & Zimmermann

(56) References cited:
- EP-A- 1 291 948
- EP-A- 1 315 225
- EP-A- 1 317 010
- WO-A-02/061870
- WO-A-03/041203
- US-A1- 2002 071 975

## Description

### Background of the Invention

### 1. Field of the Invention

The present invention relates to a fuel cell power generation system configured to generate an electric power using a fuel cell.

### 2. Description of the Related Art

In a fuel cell power generation system equipped with a polymer electrolyte fuel cell, a fuel processor generates a fuel gas which is supplied to a fuel electrode of the fuel cell. The fuel processor reforms a feed gas such as a natural gas using a steam to thereby generate a hydrogen-rich fuel gas. Meanwhile, in the fuel cell, air is supplied as an oxidizing gas to an oxidizing electrode disposed to be opposed the fuel electrode with a polymer electrolyte membrane interposed between the fuel electrode and the oxidizing electrode. The fuel cell generates an electric power using the fuel gas and the air.

If the hydrogen-rich fuel gas remains unconsumed after a reaction within the above constructed fuel cell power generation system in a stopped state, hydrogen in the fuel gas and the air contact each other, thereby leading to an explosion. For safety, it is necessary to remove the fuel gas from an interior of the system during a period other than during an operation of the system.

In one method of removing the fuel gas from the interior of the fuel cell power generation system, an inert gas, for example, nitrogen, is typically caused to flow within the fuel processor, the fuel cell, and so on through gas passages to purge the fuel gas therefrom, thus purging the fuel gas remaining in each portion. In order to purge the fuel gas using nitrogen, however, the fuel power generation system is required to have nitrogen storage equipment such as a large-sized nitrogen cylinder, a nitrogen supply device, etc, and maintenance such as replacement and replenish of the nitrogen gas cylinder must be carried out as necessary. This makes the system large-sized and intricate, which results in an increase in initial cost or running cost of the system.

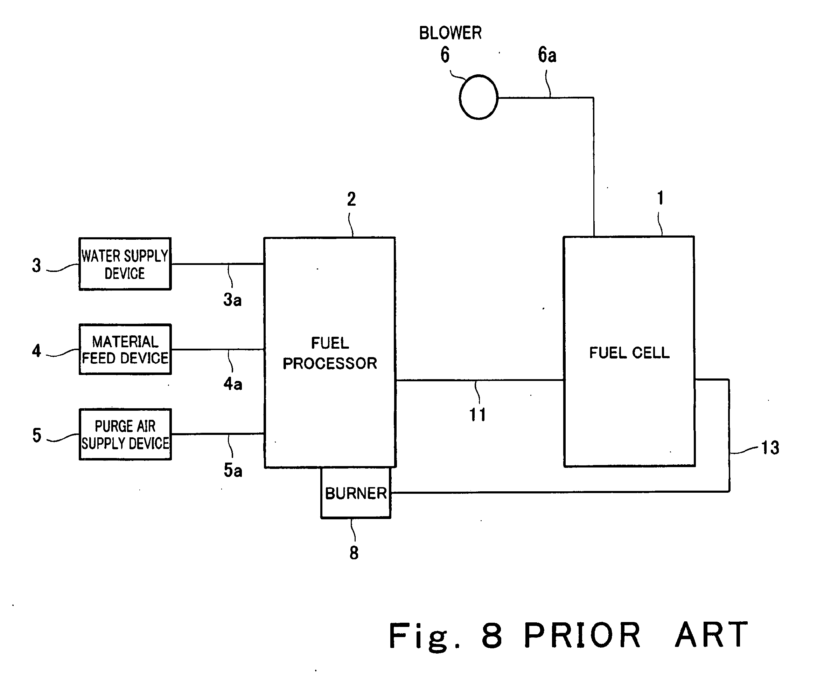

Fig. 8 is a schematic view showing a construction of a fuel cell power generation system capable of removing a fuel gas from the interior of the system without the purging using the inert gas (see Publication WO01/97312). As shown in Fig. 8, the fuel cell power generation system comprises a fuel processor 2, a water supply device 3 configured to supply water to the fuel processor 2, a material feed device 4 configured to supply a feed gas to the fuel processor 2, and a purge air supply device 5 configured to supply purge air to the fuel processor 2, a fuel cell 1, a blower 6 configured to supply air to an oxidizing electrode of the fuel cell 1, a cooler (not shown) configured to cool the fuel cell 1 during power generation, and a burner 8 configured to combust a fuel gas (hereinafter referred to as an off gas) remaining unconsumed after a reaction within the fuel cell 1 and discharged from the fuel cell 1 to heat the fuel processor 2. The fuel cell 1 is of a polymer electrolyte type and has a polymer electrolyte membrane as an electrolyte membrane. The water supply device 3 is connected to the fuel processor 2 through a pipe 3a. The material feed device 4 is connected to the fuel processor 2 through a pipe 4a. The purge air supply device 5 is connected to the fuel processor 2 through a pipe 5a. The fuel processor 2 is connected to the fuel cell 1 through a pipe 11. Within the fuel cell 1, a fuel gas passage 12B is formed to connect an inlet 12A to an outlet 12C and to allow the fuel gas to be supplied to a fuel electrode (not shown). Further, the outlet 12C is connected to the burner 8 through a pipe 13. And, the blower 6 is connected to an oxidizing electrode (not shown) of the fuel cell 1 through a pipe 6a.

When the above constructed fuel cell power generation system is stopped, supply of the feed gas from the material feed device 4 to the fuel processor 2 is stopped, and only water is supplied from the water supply device 3 to the fuel processor 2, which generates a steam. The steam is supplied to the fuel cell 1 through the pipe 11 and flows therein. Further, the steam is supplied to the burner 8 through the pipe 13. Thereby, the fuel gas existing within the fuel processor 2, the fuel cell 1, and the pipes 11 and 13 is purged therefrom by the steam, and combusted in the burner 8. And, after the purging using the steam, air is supplied from the purge air supply device 5 to the fuel processor 2, and then from the fuel processor 2 to the fuel cell 1 through the pipe 11. The air flows within the fuel cell 1. The air is discharged from the outlet 12C and sent through the pipe 13 to the burner 8, from which the air is released. Such an air flow allows the remaining gas to be purged by the air from the interiors of the fuel processor 2, the fuel cell 1, and the pipes 11 and 13. As should be appreciated from the foregoing, in accordance with the above construction, the fuel gas can be purged from the interior of the fuel cell power generation system without the use of the inert gas such as nitrogen.

However, when the purging is performed using the steam and then the purge air which is not humidified, the polymer electrolyte membrane of the fuel cell 1 is dried by this unhumidified purge air. Since the polymer electrolyte membrane exhibits electric conductivity in a wet state, capability of the membrane may be degraded due to an increase in an internal resistance of the membrane or the like if the polymer electrolyte membrane is dried. Consequently, power generation efficiency of the fuel cell 1 may be reduced.

In order to inhibit the polymer electrolyte membrane of the fuel cell 1 from drying, there is a method in which the purging is performed using humidified air rather than the unhumidified air after the purging using the steam. The purging using the humidified air can inhibit the polymer electrolyte membrane from drying, but as temperature of each portion in the system in a stopped state decreases with an elapse of time, a steam contained in the humidified air is condensed into water, which remains in each portion of the system. And, if the water remains within the pipes 11 and 13 or gas passage within the fuel processor 2, a flow of the gas such as the fuel gas becomes unstable when the system re-starts. In worst cases, the gas passage may be clogged with water, and thereby supply of the water may stop. Consequently, the system may stop urgently.

The purging using the inert gas such as nitrogen is carried out during start of the system as well as during the stop of the system. By the purging during the start, the gas remaining within the system in the stopped state is purged therefrom, and thereby, the system is ready to generate an electric power. The use of nitrogen or the like in the purging during the start causes the above described problem. During start of the system, the fuel processor 2, the fuel cell 1, and the like are required to increase temperatures up to operating temperatures for power generation. Specifically, the fuel cell 1 is required to increase the temperature to approximately 70°C, while the fuel processor 2 is required to increase the temperature to approximately 700°C. It takes time to increase the temperature of the fuel processor 2. For this reason, while the fuel processor 2 is increasing the temperature, the polymer electrolyte membrane of the fuel cell 1 may be dried. Consequently, the above described problem arises.

### SUMMARY OF THE INVENTION

The present invention has been developed under the circumstances, and an object of the present invention is to provide a fuel cell power generation system capable of reducing initial cost and running cost and of generating an electric power with high efficiency and improved stability while sufficiently ensuring safety..

In order to achieve the above-described object, there is provided a fuel cell power generation system comprising a fuel processor configured to reform a material into a fuel gas containing hydrogen using water and a reforming catalyst; a fuel cell configured to generate an electric power using an oxidizing gas and the fuel gas; a burner configured to combust the fuel gas remaining unconsumed within the fuel cell to heat the fuel processor; a fuel gas passage connected to the fuel processor, the fuel cell, and the burner; a water supply device configured to supply the water to the fuel processor; a material feed device configured to feed the material to the fuel processor; a purge air supply device configured to supply purge air that purges the fuel gas to the fuel processor, and a controller that is configured to control said water supply device such that a first purging is performed using a steam in an interior of the fuel processor and an interior of the fuel cell, then, to control said water supply device and said purge air supply device such that a second purging is performed using humidified air in the interior of the fuel cell, and to control said purge air supply device such that a third purging is performed using unhumidified air in the interior of the fuel processor, during a stop operation of the fuel cell power generating system.

The second purging may be started at a time point when the steam which is not less than a volume of a gas passage ranging from the fuel processor to the fuel cell is supplied during the first purging.

The third purging may be performed at a time point when a temperature of the fuel processor becomes not higher than a temperature at which a reforming catalyst within the fuel processor is not degraded by the air supplied to the fuel processor.

The first purging may be performed in such a manner that the steam is generated in the fuel processor from the water supplied from the water supply device, and the fuel gas existing within at least the fuel processor is purged from the fuel processor by flowing the steam at least the fuel processor, the second purging may be performed in such a manner that the water and the air are respectively supplied from the water supply device and the purge air supply device to the fuel processor, and mixed to generate the humidified air therein, and the fuel gas existing within the fuel processor, the fuel cell, and the fuel gas passage is purged therefrom by flowing the humidified air within the fuel processor, the fuel cell, and the fuel gas passage, and the third purging may be performed in such a manner that the water supply device is stopped to stop supply of the water to the fuel processor and the air is supplied to the fuel processor, and the humidified air existing within the fuel processor and the fuel gas passage is purged therefrom by flowing unhumidified air within the fuel processor and the fuel gas passage.

In accordance with this construction, since the purging is performed without the use of an inert gas such as nitrogen, there is no need for storage equipment or supply equipment such as a gas cylinder. That is, the purging is accomplished by utilizing the construction of the system for power generation. In addition, maintenance such as replenish or replacement of the gas cylinder is unnecessary. This leads to reduced system cost and running cost.

In the fuel cell under a temperature condition which is not higher than a dew point temperature of the steam, the steam tends to be condensed into water. Although it is difficult to sufficiently drive out the fuel gas merely by the first purging, the second purging is performed using the humidified air after the first purging, and air contained in the humidified air can sufficiently drive out the fuel gas within the fuel cell therefrom. In this case, the steam contained in the humidified air is condensed into water which can keep a wet state of a polymer electrolyte membrane of the fuel cell.

Since the third purging is performed using the unhumidified air in the portions other than the fuel cell after the second purging using the humidified air, it is possible to remove the condensed water from the fuel processor or the fuel gas passage by drying the water by the unhumidified air. In addition, since the unhumidified air replaces the humidified air existing within these portions, it is possible to inhibit condensation into water even when temperatures of these portions decrease during the stopped state of the system. So, it is possible to inhibit water from remaining in these portions. This enables the system to operate stably. Furthermore, since the third purging is performed in the portions other than the fuel cell, the wet state of the polymer electrolyte membrane in the second purging can be kept in the fuel cell. Consequently, degradation of performance of the fuel cell which would be caused by dry of the polymer electrolyte membrane can be inhibited, and high durability is be realized.

The fuel gas passage may include a first passage through which the fuel processor is connected to the fuel cell, a second passage through which the fuel cell is connected to the burner, a third passage having end portions respectively connected to the first passage and the second passage, the first passage being connected to the second passage through the third passage so as to bypass the fuel cell, a passage switch configured to switch a fuel cell passage and a fuel cell bypass passage, the fuel cell passage extending from the fuel processor to the fuel cell through the first passage, and the fuel cell bypass passage extending from the fuel processor to the burner through the first passage, the third passage, and the second passage, and a valve provided in the second passage to be located upstream of a point in a flow of the fuel gas where the second passage is connected to the third passage, wherein during the third purging, the valve may be closed, and the passage switch may be switched to form the fuel cell bypass passage to thereby allow the unhumidified air to be supplied from the fuel processor to the burner through the fuel cell bypass passage so as to bypass the fuel cell.

In accordance with this construction, the third purging is not performed in the fuel cell.

It is preferable that a dew point temperature of the humidified air used in the second purging is not lower than an operating temperature of the fuel cell in a power generation state.

Since the temperature of the fuel cell becomes not higher than the operating temperature for power generation during the stop operation of the system, the steam contained in the humidified air supplied to the fuel cell is condensed into water during the second purging in the above construction. This water can keep the wet state of the polymer electrolyte membrane of the fuel cell.

The first purging may be switched to the second purging, when an amount of the steam generated in the fuel processor becomes not less than a volume of at least a fuel gas passage formed within the fuel processor, and temperature of the fuel processor becomes a temperature at which the catalyst within the fuel processor is not oxidized by the air in the first purging.

The second purging may be switched to the third purging, when an amount of the air supplied from the purge air supply device to the fuel processor becomes not less than a total of a volume of a fuel gas passage within the fuel processor and a fuel gas passage within the fuel cell in the second purging.

The above and further objects and features of the invention will be more fully be apparent from the following detailed description with accompanying drawings.

### BRIEF DESCRIPTION OF THE DRAWINGS

Fig. 1 is a schematic view showing a construction of a fuel cell power generation system according to a first embodiment of the present invention;
Fig. 2 is a schematic view showing a construction of a fuel cell power generation system according to a second embodiment of the present invention;
Fig. 3 is a schematic view showing a construction of a fuel cell power generation system according to a third embodiment of the present invention;
Fig. 4 is a schematic view schematically showing a construction of a fuel cell power generation system according to a fourth embodiment of the present invention;
Fig. 5 is a flowchart schematically showing a content of a control program stored in a controller of the fuel cell power generation system in Fig. 1;
Fig. 6 is a flowchart schematically showing a content of a stop operation of the control program in Fig. 5;
Fig. 7 is a flowchart schematically showing a content of a start operation of the control program in Fig. 5; and
Fig. 8 is a schematic view showing a construction of the conventional fuel cell power generation system.

### DETAILED DESCRIPTION OF THE PREFERRED EMBODIMENTS

Hereinafter, embodiments of the present invention will be described with reference to the drawings. In the Figures, the same reference numerals denote the same or corresponding parts.

### (Embodiment 1)

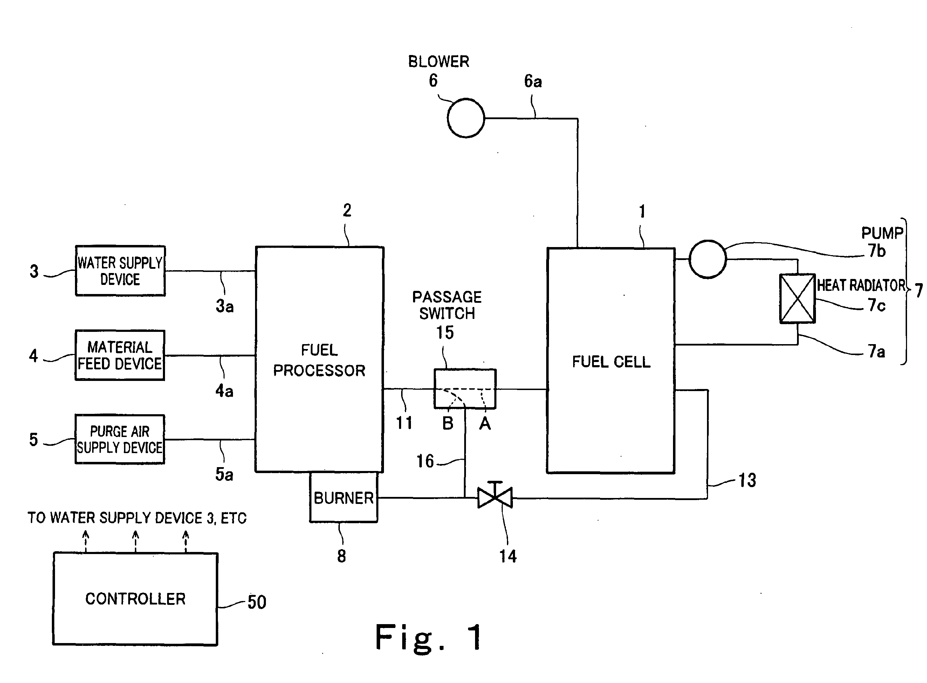

Fig. 1 is a schematic view showing a construction of a fuel cell power generation system according to a first embodiment of the present invention. Referring to Fig. 1, the fuel cell power generation system (hereinafter simply referred to as system) of this embodiment comprises a water supply device 3, a material feed device 4, a purge air supply device 5, a fuel processor 2, a fuel cell 1 equipped with a polymer electrolyte membrane, a blower 6 configured to supply air, a burner 8, a cooler 7, and a controller 50. Although simply illustrated in Fig. 1, the controller 50 is configured to control the above components 3, 4, 5, 2, 1, 6, 8, 7, and a passage switch 15, and a valve 14 which are described later. A series of operations of the system to be described later are carried out under control of the controller 50.

The water supply device 3, the material feed device 4, and the purge air supply device 5 are connected to the fuel processor 2, through pipes 3a, 4a, and 5a, respectively. The burner 8 is disposed below the fuel processor 2 and configured to heat the fuel processor 2. The fuel processor 2 is connected to an inlet 12A of the fuel cell 1 through a pipe 11. Within the fuel cell 1, there is formed a fuel gas passage 12B through which a fuel gas introduced from the inlet 12A to an inside of the fuel cell 1 is guided to an outlet 12C through a fuel electrode (not shown). The fuel cell 1 is connected to the burner 8 through a pipe 13 through which the fuel gas discharged from the outlet 12C is guided to the burner 8. A three-way valve is provided in the pipe 11 to serve as a passage switch 15. One end of a bypass pipe 16 is connected to one connecting port of the three-way valve, and the other end thereof is connected to the pipe 13. The passage switch 15 is capable of switching between a first passage A extending from the fuel processor 2 to the fuel cell 1 through the pipe 11 and a second passage B extending through the pipe 11 to reach the pipe 13 so as to bypass the fuel cell 1. Such a three-way valve is a power-driven valve capable of switching between the first passage A and the second passage B. The power-driven valve is automatically controlled by the controller 50. And, the pipe 13 is provided with a valve 14 located upstream of a point in a flow of the fuel gas where the pipe 13 is connected to the bypass pipe 16. Herein, as the valve 14, a power-driven valve capable of being automatically controlled is used.

The cooler 7 is provided with a circulating pipe 7a through which cooling water flows within the fuel cell 1. A pump 7b that increases a pressure of cooling water and a heat radiator (cooler unit)7c are provided in the circulating pipe 7a. The blower 6 is connected to the fuel cell 1 through a pipe 6a.

Although not shown, the fuel processor 2 is chiefly comprised of a reformer, a shifter, and a purifier. The reformer includes a catalyst containing ruthenium as major component. As mentioned later, the catalyst allows the water and the feed gas (e.g., natural gas) to react each other to generate a hydrogen-rich fuel gas in a reforming reaction. The fuel gas so generated in the reformer has a high CO concentration. If the fuel gas with such a high CO concentration is supplied to the fuel cell 1, the fuel cell 1 may be degraded. To avoid this, the fuel gas generated in the reformer is supplied to the shifter and then to the purifier, where CO is removed from the fuel gas and the CO concentration decreases to 20ppm or lower.

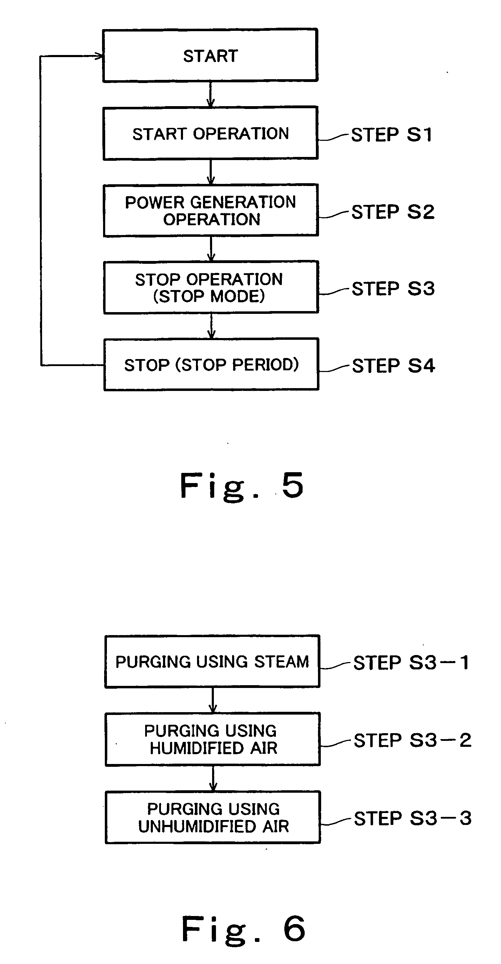

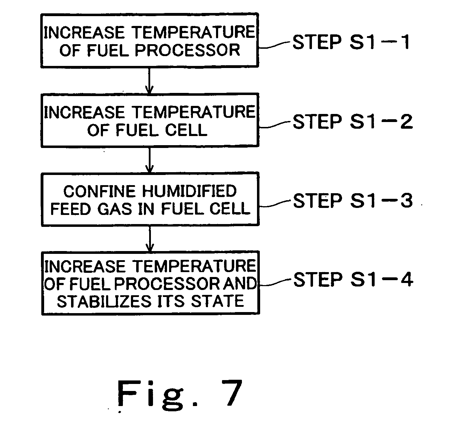

Subsequently, an operation of the system will be described. Fig. 5 is a flowchart schematically showing a content of a control program stored in the controller 50 of the system in Fig. 1. Fig. 6 is a flowchart schematically showing a content of a stop operation of the control program in Fig. 5. Fig. 7 is a flowchart schematically showing a content of a start operation of the control program.

Turning to Fig. 5, the system performs a start operation according to an operation start command (Step S1 in Fig. 5). And, when the system is ready to start, power generation operation is performed (Step S2 in Fig. 5). After the power generation operation is performed for a predetermined time period, the system performs an operation to stop the system (hereinafter also expressed as a stop-mode operation which is distinguished from a stop time period during which the system is in a stopped state) and stops (Step S4 in Fig. 5). It should be appreciated that the fuel cell 1 enters the stop time period after the stop mode. In the system, the above operations (Steps S1 to 4 in Fig. 5) are repeated.

Hereinbelow, the power generation operation (Step S2) of the system, the stop operation (Step S3) of the system, and the start operation (Step S1) of the system will be sequentially described.

When an electric power is generated in the system (Step S2), the passage switch 15 is switched to form the first passage A extending from the fuel processor 2 to the fuel cell 1 through the pipe 11, and the valve 14 in the pipe 13 is opened. Then, water is supplied from the water supply device 3 through the pipe 3a to the reformer (not shown) of the fuel processor 2 heated by the burner 8 and thereby kept at a temperature of approximately 700°C, and a feed gas (natural gas) is supplied from the material feed device 4 to the reformer in this state through the pipe 4a. Within the reformer of the fuel processor 2, the water supplied from the water supply device 3 is evaporated into steam, which allows the feed gas to be reformed to generate a hydrogen-rich fuel gas. The generated fuel gas is supplied to the shifter and then to the purifier (not shown). Thereby, CO is removed from the fuel gas and its concentration is lowered.

As described above, during power generation, the passage switch 15 is switched to form the first passage A. The fuel gas generated within the fuel processor 2 is sent to the inlet 12A of the fuel cell 1 through the pipe 11 and the first passage A. Then, the fuel gas is supplied to a fuel electrode (not shown) of the fuel cell 1 through the second passage 12B. Also, air that serves as an oxidizing gas is supplied from the blower 6 to an oxidizing electrode (not shown) of the fuel cell 1 through the pipe 6a.

In the fuel cell 1, the fuel gas and the air supplied in this manner react each other, thereby generating an electric power. During power generation, since heat is generated in the fuel cell 1, the cooler 7 cools the fuel cell 1 in such a manner that the cooling water pressure-increased by the pump 7b flows within the fuel cell 1 through the circulating pipe 7a. The cooling water exchanges heat with the fuel cell 1, and thereby recovers heat from the fuel cell 1. Further, the cooling water exchanges heat with the heat radiator 7c and radiates heat. The resulting cooled cooling water re-flows within the fuel cell 1, which is thereby kept at approximately 70°C.

The fuel gas remaining unconsumed after the power generation reaction in the fuel cell 1 flows through the fuel gas passage 12B and is discharged from the outlet 12c into the pipe 13 as an off gas. As described above, since the valve 14 of the pipe 13 is opened, the off gas is supplied to the burner 8 through the pipe 13. In the burner 8, the off gas is combusted into a combustion gas to heat the fuel processor 2 to keep the temperature of the fuel processor 2.

When the system is stopped (in the stop mode in Fig. 5 (Step S3)) after the power generation, the blower 6 is stopped to stop supply of the air to the fuel cell 1, and the cooler 7 is stopped. And, purging is performed in the fuel processor 2, the fuel cell 1, gas passages 11 and 13, and the like by a steam, humidified air, and unhumidified air.

When purging is performed using the steam (Step S3-1 in Fig. 6), the passage switch 15 is switched to form the first passage A, and the valve 14 is opened as in the power generation operation. Then, the material feed device 4 is stopped to stop supply of the feed gas to the fuel processor 2. At this time, water supply from the water supply device 3 to the fuel processor 2 continues. Within the fuel processor 2, the supplied water is evaporated into a steam. But, since supply of the feed gas is stopped at this time, the reforming reaction does not occur within the fuel processor 2. So, the steam remains within the fuel processor 2. The steam causes the fuel gas existing within the fuel processor 2 to be driven out therefrom to the pipe 11. Then, the fuel gas flows through the pipe 11 and the first passage A, and is introduced from the inlet 12A into the fuel cell 1. Thereby, the fuel gas existing within the pipe 11 and the fuel gas existing within the fuel cell 1 are sequentially driven out therefrom. The fuel gas flows within the fuel cell 1 through the fuel gas passage 12B and then is sent from the outlet 12C to the burner 8 through the pipe 13. The fuel gas driven out from the fuel processor 2, the pipe 11, the fuel cell 1, and the pipe 13 in this manner is sent to the burner 8 and combusted into the combustion gas. As should be appreciated from the foregoing, the fuel gas is purged from the interior of the fuel processor 2 and the interior of the fuel cell 1 by using the steam.

If the purging using the steam continues, the amount of the fuel gas purged from the fuel processor 2 or the fuel cell 1 gradually decreases. Correspondingly, the amount of the fuel gas being supplied to the burner 8 gradually decreases, and in time, combustion in the burner 8 stops. Since the fuel processor 2 is kept at a temperature as high as approximately 700°C during power generation, the steam continues to be generated by remaining heat within the fuel processor 2 regardless of the stop of heating in the burner 8. By utilizing this steam, the purging continues. While the steam purging continues by utilizing the remaining heat in the fuel processor 2, the temperature of the fuel processor 2 gradually decreases.

Next, when the amount of the purge steam generated in the fuel processor 2 becomes sufficient to drive out the fuel gas from at least the fuel processor 2 and the fuel cell 1, for example, substantially equal to a volume of the fuel gas passage extending from the fuel processor 2 to the fuel cell 1, and the temperature of the fuel processor 2 decreases to a value at which the catalyst in the reformer is not oxidized by the air supplied to the fuel processor 2, the purge using the steam switches to the purge using the humidified air (Step S3-2 in Fig. 6).

The time when the purge using the steam switches to the purge using the humidified air may be determined by directly detecting the amount of water to be supplied to the fuel processor 2 to generate the steam. Alternatively, this switching time may be determined based on the time when the water is supplied to the fuel processor 2. Since the catalyst of the reformer of the fuel processor 2 contains ruthenium as a major component as described above, the temperature at which degradation of catalytic capability resulting from oxidization of ruthenium by air does not occur is set to allow for a certain safety rate. For example, when the temperature of the fuel processor 2 decrease to 400°C or lower (here, approximately 400°C), the humidified air is supplied to the fuel processor 2 and the purging is performed using the humidified air as follows. The temperature of the fuel processor 2 is not intended to be limited to the above but may be set as desired because it may vary depending on a set condition of the safety rate, or type of catalyst.

As in the purging using the steam, to carry out the purging using the humidified air, the switch 15 is switched to form the first passage A, and the valve 14 is opened. Then, the water is supplied from the water supply device 3 to the fuel processor 2 and is evaporated into the steam. While the steam is generated within the fuel processor 2, the air is supplied from the purge air supply device 5 to the fuel processor 2. Thereby, the steam and the air are mixed within the fuel processor 2 and evaporated into the humidified air. In this case, since the fuel gas has been driven out from the fuel processor 2 by the purging using the steam, the fuel gas and the air do not contact each other within the fuel processor 2. As a result, safety is ensured.

The humidified air contains the air and the steam in a preset ratio so that its dew point temperature becomes not lower than an operating temperature for power generation of the fuel cell 1. Specifically, assuming that a flow rate of the air supplied to the fuel processor 2 is 10L/min, the flow rate of water to be supplied to the fuel processor 2 is adjusted to 3.6g/min or higher, thereby generating the humidified air having a dew point of 70°C or higher. By setting the dew point temperature of the humidified air in this manner, the steam is condensed into water to allow a polymer electrolyte membrane of the fuel cell 1 to be kept in a wet state in the fuel cell 1 during the stop operation in which the fuel cell 1 is under a temperature condition not higher than the operating temperature for power generation.

The humidified air generated in the fuel processor 2 flows through the pipe 11 and the passage A and is supplied to the fuel cell 1. Within the fuel cell 1, the humidified air flows from the inlet 12A to the outlet 12C through the fuel gas passage 12B. As described above, since the temperature of the fuel cell 1 is not higher than the operating temperature (approximately 70°C) for power generation during the stop operation, the humidified air having a dew point temperature of not lower than 70°C is condensed into water within the fuel gas passage 12B. The humidified air in a saturated state, excluding the condensed water, flows to the outlet 12C through the fuel gas passage 12B. Then, the humidified air flows from the outlet 12C into the pipe 13, through which the fuel gas is sent to the burner 8 and released therefrom. Such a flow of the humidified air allows the fuel gas remaining within the fuel cell 1 and within the pipe 13 after the steam purging to be driven out therefrom. Thus, the purging using the humidified air is performed. The driven-out fuel gas is sent to the burner 8 through the pipe 13 and released to outside. Within the fuel cell 1, the condensed water keeps the wet state of the electro polymer membrane.

During the purging using the humidified air, combustion in the burner 8 is weak or otherwise is in a stopped state, and with an elapse of time, the temperatures of the fuel processor 2, the fuel cell 1, the pipes 11 and 13 and so on, decrease. And, when the temperatures of these portions become lower than the dew point temperature of the humidified air, the steam contained in the humidified air is condensed into water, which remains within these portions. It is desirable that the water remain within the fuel cell 1, because this water can keep the wet state of the polymer electrolyte membrane. But, the water remaining within the fuel processor 2 or the pipes 11 and 13 may clog the gas passages, thereby causing, for example, an unstable gas flow to occur when the system re-starts. To avoid this, in this embodiment, in order to inhibit the steam from being condensed into water or the water from remaining within the fuel processor 2, or the pipes 11 and 13 after the system stops, purging is performed using unhumidified air in the portions other than the fuel cell 1 as described below (Step S3-3 in Fig. 6).

The humidified air sufficient to drive out the fuel gas and the steam existing within the fuel processor 2, the fuel cell 1, and the like, therefrom, for example, the humidified air not less than the amount equal to a total of the volume of the fuel processor 2 and the volume of the fuel cell 1 (specifically, the amount twice or three times as large as the total) is caused to flow as described above. And, if the temperature of the fuel processor 2 is not higher than the temperature at which the catalyst in the reformer is not oxidized by the air supplied to the fuel processor 2, or after the humidified air continues to flow until the temperature of the fuel processor 2 decreases to this temperature or lower, the switch 15 is switched to form the second passage B extending through the pipe 11 to reach the pipe 16, and the valve 14 is closed. Then, the water supply device 3 is stopped to stop supply of the water, and only air continues to be supplied from the purge air supply device 5 to the fuel processor 2. Since supply of the water is stopped, no steam is generated in the fuel processor 2. Under this condition, the air supplied to the fuel processor 2 is not humidified. Then, this unhumidified air flows from the fuel processor 2 into the pipe 11, and then into the pipe 13 through the pipe 16 and the second passage B. The humidified air is sent to the burner 8 and released to outside. Such a flow of the unhumidified air causes the humidified air existing within the fuel processor 2, and the pipes 11 and 13 to be driven out therefrom. In this manner, the purging using the unhumidified air is performed.

Thus, since the unhumidified air replaces the humidified air within the fuel processor 2, and the pipes 11 and 13 after the purging using the unhumidified air, the steam is inhibited from being condensed into the water within the fuel processor 2, and the pipes 11 and 13 even when the components of the system are kept at a low temperature under the stopped state. In addition, the water remaining within the gas passages after the purging using the humidified air is dried by the unhumidified air and removed therefrom. Since the purging using the unhumidified air is performed through the passage that bypass the fuel cell 1, the unhumidified air is not supplied to the fuel cell 1, while the water generated in the purging using the humidified air keeps the wet state of the polymer electrolyte membrane of the fuel cell 1. Consequently, it is possible to inhibit the water from remaining in the portions other than the fuel cell 1 while inhibiting the polymer electrolyte membrane from drying.

After the purging using the unhumidified air, the purge air supply device 5 is stopped to stop supply of the air to the fuel processor 2. Thereby, a series of operations in the stop operation of the system are completed, and the system is stopped (Step S4 in Fig. 5).

Since the purging is performed using the steam and then the humidified air in this embodiment, it is possible to drive out the fuel gas sufficiently by using the humidified air from the fuel cell 1 where the steam tends to be condensed because of a temperature of the fuel cell 1 lower than the dew point temperature of the steam, and such condensation makes it difficult for the steam purging to sufficiently drive out the fuel gas. In addition, since the steam contained in the humidified air is condensed into water during the purging using the humidified air, this water can keep the wet state of the polymer electrolyte membrane of the fuel cell 1. In this case, since the fuel gas within at least the fuel processor 2 has been removed by the steam purging, the humidified air supplied to the fuel processor 2 does not directly contact the fuel gas. Consequently, safety is ensured. Further, since the purging using the unhumidified air is performed in the portions other than the fuel cell 1 after the purging using the humidified air, it is possible to remove the water remaining within the fuel processor 2 or the pipes 11 and 13, and the steam which would be condensed into water during the stop period of the system from these portions, while keeping the wet state of the polymer electrolyte membrane of the fuel cell 1.

Subsequently, the start operation (Step S1 in Fig. 5) of the system after the stopped state will be described with reference to Fig. 7. During start, first of all, the switch 15 is switched to form the passage A extending from the fuel processor 2 to the fuel cell 1 through the pipe 11, and the valve 14 is opened. And, the feed gas is supplied from the material feed device 4 to the fuel processor 2 through the pipe 4a, and from the fuel processor 2 to the fuel cell 1 through the pipe 11. Within the fuel cell 1, the feed gas flows from the inlet 12A to the outlet 12C through the fuel gas passage 12B. The feed gas is discharged from the outlet 12C and is supplied to the burner 8 through the pipe 13. Such a flow of the feed gas causes the gas remaining within the fuel processor 2, the pipe 11, the fuel cell 1, and the pipe 13 under the stopped state of the system to be driven out.

Within the burner 8, the feed gas is combusted into the combustion gas to heat the fuel processor 2. In this case, the fuel processor 2 is heated to a temperature at which the fuel gas is not generated (i.e, the reforming reaction does not occur) if the feed gas and the water are supplied to the fuel processor 2, but instead, a humidified feed gas to be described later is generated and carbon contained in the feed gas is not deposited by carbonization within the fuel processor 2 (Step S1-1 in Fig. 7). Here, the fuel processor 2 is heated to, for example, approximately 200°C. In this case, the temperature of the fuel processor 2 is adjusted by controlling the material feed device 4 to adjust the amount of the feed gas to be supplied to the burner 8 and thereby adjust calories obtained in the burner 8. While the fuel processor 2 is heated to, for example, approximately 200°C, the temperature is not limited to this, but may be suitably set depending on an internal structure of the fuel processor 2, a structure of the catalyst, and so on.

When the temperature of the fuel processor 2 reaches approximately 200°C, the water is supplied from the water supply device 3 to the fuel processor 2 through the pipe 3a. Within the fuel processor 2, the water is evaporated into steam, which is mixed with the feed gas, and thus, the humidified feed gas is generated. The humidified feed gas is generated by adjusting a mixing ratio between the feed gas and the steam so that a dew point temperature of the humidified feed gas becomes not lower than a value up to which the temperature of the fuel cell 1 increases during the start operation. Since the temperature of the fuel cell 1 increases to approximately 80°C, the dew point temperature of the humidified feed gas is set not lower than 80°C. For example, assuming that a flow rate of the air supplied to the fuel processor 2 is 10L/min, the flow rate of water to be supplied the fuel processor 2 is set to 7.1g/minute or higher, thereby generating the humidified air having a dew point temperature of 80°C or higher. By setting the dew point temperature of the humidified feed gas in this manner, the steam is condensed into water to allow the polymer electrolyte membrane of the fuel cell 1 to be kept in a wet state, in the fuel cell 1 under a temperature condition which is not higher than the dew point temperature of the humidified feed gas as described later.

The humidified feed gas generated in the fuel processor 2 is supplied to the fuel cell 1 through the pipe 11 and the first passage A. The humidified feed gas flows from the inlet 12A to the outlet 12C through the fuel gas passage 12B, and is sent to the burner 8 through the pipe 13 and combusted. Such a flow of the humidified feed gas allows the fuel cell 1 to be heated by the humidified feed gas to thereby increase the temperature (Step S1-2) in Fig. 7. And, when the temperature of the fuel cell 1 becomes approximately 80°C, the switch 15 is switched to form the second passage B that bypasses the fuel cell 1 and the valve 14 is closed. Thereby, the humidified feed gas is confined within the fuel cell 1 (Step S1-3 in Fig. 7).

The reason why the fuel cell 1 is heated to approximately 80°C higher than the operating temperature (approximately 70°C) for power generation is that the temperature of the fuel cell 1 will decrease while the fuel cell 1 is left until the temperature of the fuel processor 2 becomes stable. In view of such a temperature decrease, the temperature of the fuel cell 1 is set to increase up to approximately 80°C so that the temperature of the fuel cell 1 at the end of the start operation becomes approximately 70°C equal to the operating temperature for power generation.

When the humidified feed gas is confined within the fuel cell 1 as described above, steam contained in the humidified air is condensed into water within the fuel cell 1 because the dew point temperature of the humidified feed gas is set to 80°C or higher. This water can keep the wet state of the polymer electrolyte membrane of the fuel cell 1.

With the humidified feed gas confined within the fuel cell 1, the feed gas and the water are supplied to the fuel processor 2 until the temperature of the fuel processor 2 becomes a value suitable for generation of the fuel gas, for example, approximately 700°C. Within the fuel processor 2, the humidified feed gas is generated as described above under the condition in which the temperature is not sufficiently high for the reforming reaction to occur, but with an increase in the temperature, the reforming reaction progresses to generate the fuel gas. The humidified feed gas and the fuel gas generated in the fuel processor 2 flow through the pipe 11 and the second passage B and into the pipe 16. Further, the humidified feed gas and the fuel gas are sent to the burner 8 through the pipe 13 and combusted therein (Step S1-4 in Fig. 7).

In this case, the amount of the feed gas supplied from the material feed device 4 is adjusted so that the temperature of the fuel processor 2 becomes approximately 700°C. And, the amount of water supplied from the water supply device 3 is adjusted to generate a hydrogen-rich gas in the reforming reaction within the fuel processor 2. Herein, the amount of water is adjusted so that the water contains hydrogen atoms about five to six times as many as carbon atoms in a composition of a natural gas which is the feed gas.

By the way, until the temperature of the entire fuel processor 2 becomes stable after the temperature of the fuel processor 2 reaches the set temperature, for example, approximately 700°C, the generated fuel gas contains high-concentration CO. As described previously, if the fuel gas containing high-concentration CO is supplied to the fuel cell 1, its performance is degraded. Considering this, the fuel gas containing high-concentration CO generated in the fuel processor 2 until the temperature of the fuel processor 2 becomes stable is not supplied to the fuel cell 1 but to the burner 8 through the pipes 11, 16 and 13.

Since the humidified feed gas is confined within the fuel cell 1 until the fuel processor 2 is heated up to 700°C and becomes stable at this temperature, the wet state of the polymer electrolyte membrane is kept.

When the temperature of the entire fuel processor 2 becomes stable at approximately 700°C and concentration of CO contained in the generated fuel gas becomes 20ppm or lower, the valve 14 is opened. Simultaneously, the passage switch 15 is switched so that the fuel gas is supplied to the fuel cell 1 through the pipe 11 and the first passage A. Thereby, the fuel gas generated in the fuel processor 2 is supplied to the fuel cell 1 through the pipe 11. While the fuel gas is supplied to the fuel cell 1, air is supplied from the blower 6 to the fuel cell 1 through the pipe 6a. Thereby, power generation is performed in the fuel cell 1 (Step S2 in Fig. 5) in the manner as described above.

As should be appreciated from the foregoing, in the system of this embodiment, the purging is carried out without the use of an inert gas such as nitrogen during the stop operation and the start operation of the system, there is no need for equipment such as storage equipment or supply equipment of the purge inert gases. Consequently, an initial cost or a running cost of the system can be reduced. In addition, since it is possible to inhibit the polymer electrolyte membrane of the fuel cell 1 from drying during the stop operation and the start operation, degradation of durability of the fuel cell 1 can be inhibited. Further, during the stop operation, the purge is carried out using the humidified air and then the unhumidified air, it is possible to inhibit the gas passages from being clogged with the condensed water. Consequently, the system can operate stably immediately after re-start.

In this embodiment described thus far, during the start operation of the system, the humidified feed gas is caused to flow into the fuel cell 1 for purging and confined therein, while during the stop operation of the system, the steam, the humidified air, and the unhumidified air are caused to sequentially flow within the fuel processor 2, the fuel cell 1, and the pipes 11, 13, and the like for purging. Alternatively, the start operation and the stop operation are not necessarily combined. For example, the stop operation may be performed only when the system stops, and the start operation may be performed only when the system starts.

### (Embodiment 2)

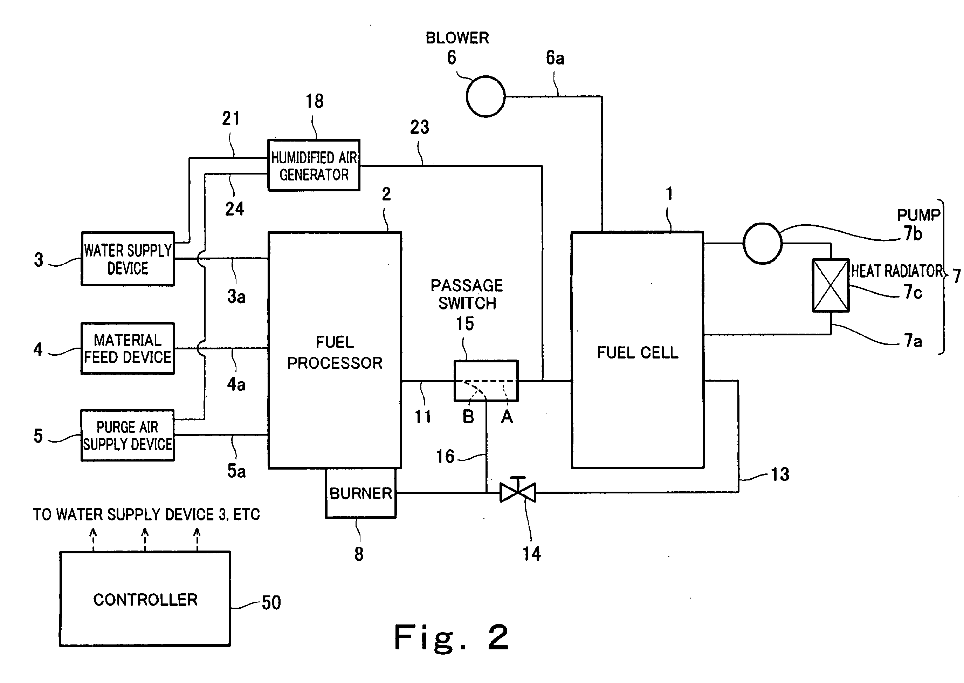

Fig. 2 is a schematic view showing a construction of a fuel cell power generation system according to a second embodiment of the present invention. Turning now to Fig. 2, the system of this embodiment is substantially identical in construction to that of the first embodiment except that the system of this embodiment is equipped with a humidified air generator 18 configured to generate humidified air supplied to the fuel cell 1.

Specifically, in the system of this embodiment, the water supply device 3 is connected to the humidified air generator 18 through a pipe 21, and the purge air supply device 5 is connected to the humidified air generator 18 through a pipe 30. And, the humidified air generator 18 is connected to a portion of the pipe 11 which is located downstream of the switch 15 in the flow of the fuel gas through a pipe 23. The humidified air generator 18 is provided with a heater to heat the generator 18. The other construction is identical to that of the first embodiment.

Regarding the operation of the system, the power generation operation (Step S2) of the system in Fig. 5 and the start operation (Step S1) of the system in Fig. 5 are similar to those of the first embodiment. Specifically, in the power generation operation (Step S2) and the start operation (Step S1), the humidified air generator 18 is stopped, and supply of water from the water supply device 3 and supply of purge air from the purge air supply device 5 to the humidified air generator 18 are stopped.

Hereinbelow, the stop operation (Step S3) different from that of the first embodiment will be described.
First of all, the steam purging is performed as in the first embodiment. Specifically, the humidified air generator 18 is stopped, and supply of water from the water supply device 3 and supply of purge air from the purge air supply device 5 to the humidified air generator 18 are stopped.

Next, when the amount of the purge steam generated in the fuel processor 2 becomes sufficient to drive out the fuel gas existing within at least the fuel processor 2 and the fuel cell 1 therefrom, for example, substantially equal to a volume of the fuel gas passage extending from the fuel processor 2 to the fuel cell 1, the purge using the steam switches to the purge using the humidified air (Step S3-2 in Fig. 6).

When the purge using the humidified air is performed, the passage switch 15 is switched to form the first passage A, and the valve 14 is opened. And, water is supplied from the water supply device 3 to the humidified air generator 18, where the steam is generated. Also, air is supplied from the purge air supply device 5 to the humidified air generator 18. Within the humidified air generator 18, the steam and air are mixed and generated into humidified air. In this case, since the fuel gas within the fuel cell 1 has been purged by the steam purging, the fuel gas and the air do not directly contact within the fuel cell 1. Consequently, safety is ensured.

The dew point temperature of the humidified air is set as in the first embodiment.

The humidified air generated in the humidified air generator 18 is supplied to the fuel cell 1 through the pipe 23 and the pipe 11. And, as in the first embodiment, the purging is performed using the humidified air. And, when the humidified air not less than the volume of the fuel cell 1, more sufficiently, the humidified air twice to three times as large as the volume of the fuel cell 1 is caused to flow within the fuel cell 1, the purging using the humidified air is completed. When the purging using the humidified air is completed, the valve 14 is closed, the humidified air generator 18 is stopped, and supply of water from the water supply device 3 and supply of the purge air from the purge air supply device 5 to the humidified air generator 18 are stopped.

If the temperature of the fuel processor 2 has not yet decreased to a value at which the catalyst in the reformer is not oxidized by the air supplied to the fuel processor 2 after the steam purging is completed, the water supply device 3 continues to supply water to the fuel processor 2 after the humidified air generator 18 starts a purge operation. As described in the first embodiment, since combustion in the burner 8 is weak or in a stopped state, the purging using the unhumidified air is performed in the portions other than the fuel cell 1 when the temperature of the fuel processor 2 decreases to the value at which the catalyst in the reformer is not oxidized by the air (Step S3-3 in Fig. 6).

After the purging using the unhumidified air, supply of the purge air from the purge air supply device 6 to the fuel processor 2 is stopped.

Thus, a series of operations during the stop operation of the system are completed, and the system is stopped (Step S4 in Fig. 5).

As should be appreciated from the foregoing, unlike in the first embodiment, the system of this embodiment is configured to perform purging for the fuel cell 1 using the humidified air, and performs purging for the portions other than the fuel cell 1, for example, the fuel processor 2, the pipes 11 and 13, and the burner 8, using the unhumidified air, without the use of the steam generated in the fuel processor 2.

### (Embodiment 3)

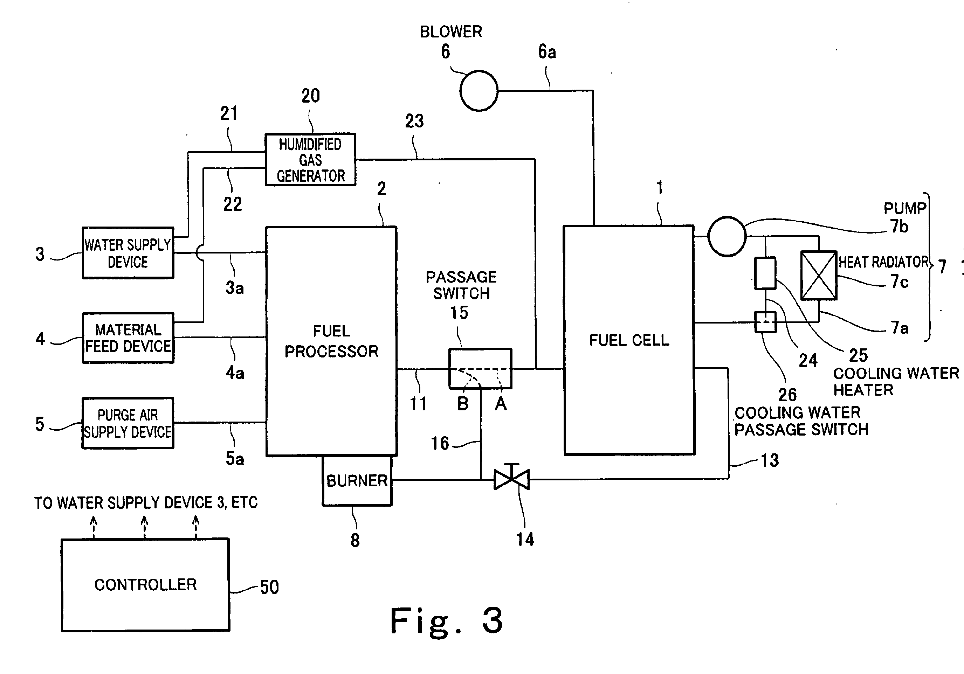

Fig. 3 is a schematic view showing a construction of a fuel cell power generation system according to a third embodiment of the present invention. Turning now to Fig. 3, the fuel cell power generation system of this embodiment is substantially identical to that of the first embodiment except that the system of this embodiment is equipped with a humidified gas generator 20 configured to generate a humidified feed gas to be supplied to the fuel cell 1 and a cooling water heater 25 configured to increase temperature of the fuel cell 1.

In the system of this embodiment, the water supply device 3 is connected to the humidified gas generator 20 through the pipe 21, and the material feed device 4 is connected to the humidified has generator 20 through the pipe 22. And, the humidified gas generator 20 is connected to a portion of the pipe 11 which is located downstream of the passage switch 15 in the flow of the fuel gas through the pipe 23. The humidified gas generator 20 is provided with a heater to heat the generator 20.

The cooler 7 of the fuel cell 1 of this embodiment is constructed such that a bypass pipe 24 is connected to the circulating pipe 7a. The bypass pipe 24 is provided to permit cooling water discharged from the fuel cell 1 to return to the pump 7b so as to bypass the heat radiator 7c and to re-flow within the fuel cell 1. A cooling water heater 25 is provided in the bypass pipe 24 to heat cooling water, and a cooling water passage switch 26 is provided in the bypass pipe 24 to switch a cooling water passage from the circulating pipe 7a to the bypass pipe 24. Here, as the cooling water passage switch 26, a three-way valve configured as in the passage switch 15 is provided.

A power generation operation of the system and a stop operation of the system are performed as in the first embodiment. Specifically, during the power generation operation and the stop operation, the humidified gas generator 20 is stopped, and supply of water from the water supply device 3 and supply of the feed gas from the material feed device 4 to the humidified air generator 20 are stopped. And, the cooling water heater 25 is stopped and the cooling water passage switch 26 is switched to allow cooling water that has recovered heat from the fuel cell 1 by heat exchange to be supplied to the heat radiator 7c through the circulating pipe 7a.

Meanwhile, during the start operation of the system, temperature of the fuel cell 1 and temperature of the fuel processor 2 are increased separately as described below. This may be done concurrently or at different timings. Here, it is assumed that the temperature of the fuel cell 1 is first increased and then the temperature of the fuel processor 2 is increased.

When the temperature of the fuel cell 1 is increased, first, the cooling water passage switch 26 is switched so that the cooling water discharged from the fuel cell 1 flows to the bypass pipe 24, and the cooling water heater 25 is operated. In this construction, the cooling water pressurized by the pump 7b flows within the fuel cell 1 and returns to the pump 7b through the bypass pipe 24. The cooling water returning to the pump 7b is heated by the cooling water heater 25. Since the cooling water heated by the cooling water heater 25 flows within the fuel cell 1, heat from the cooling water is given to the fuel cell 1, which thereby increases its temperature. Although the valve 14 of the pipe 13 may be opened or closed as desired, the valve 14 is opened herein. And, the humidified gas generator 20 is stopped, and supply of water to the humidified gas generator 20 and supply of the feed gas to the humidified gas generator 20 are stopped.

When the temperature of the fuel cell 1 becomes approximately 70°C, the water supply device 3 is operated to allow water to be supplied to the humidified gas generator 20 through the pipe 21. Simultaneously, the material feed device 4 is operated to allow the feed gas to be supplied to the humidified gas generator 20 through the pipe 22. Within the humidified gas generator 20, the water is heated by a heater (not shown) and evaporated into a steam, which is mixed with the feed gas and generated into the humidified feed gas.

Herein, a ratio between the amount of the feed gas and water supplied to the humidified gas generator 20 is adjusted so that the dew point temperature of the humidified feed gas generated in the humidified gas generator 20 becomes not lower than a value up to which the temperature of the fuel cell 1 is increased for the start operation. In this case, the temperature of the fuel cell 1 is increased up to the operating temperature for power generation, e. g., approximately 70°C. Since the temperature of the fuel cell 1 is set to increase to approximately 70°C, the water is supplied to the humidified gas generator 20 at a flow rate of 3.6g/min or higher relative to the flow rate 10L/min of the feed gas so that the dew point temperature of the feed gas becomes 70°C or higher.

The humidified feed gas generated in the humidified gas generator 20 is supplied to the fuel cell 1 through the pipe 23 and the pipe 11. Within the fuel cell 1, the humidified feed gas flows from the fuel gas inlet 12A to the outlet 12C through the fuel gas passage 12B and is supplied to the burner 8 through the pipe 13 and combusted therein. This humidified feed gas purges the gases existing within the pipe 11, the fuel cell 1, and the pipe 13 under the stopped state of the system.

When the humidified feed gas supplied from the humidified gas generator 20 to the fuel cell 1 becomes sufficient to drive out the gases from the fuel cell 1, for example, the humidified feed gas equal to a volume of the fuel gas passage 12B within the fuel cell 1, the water supply device 3 and the material feed device 4 are stopped to stop supply of water and supply of the feed gas to the humidified gas generator 20, and the humidified gas generator 20 is stopped. Simultaneously, the valve 14 is closed, thereby confining the humidified feed gas within the fuel gas passage 12B of the fuel cell 1.

The humidified feed gas is confined within the fuel cell 1 until the temperature of the fuel processor 2 is increased up to 700°C and becomes stable at this temperature (hereinafter this period is referred to as a fuel processor temperature increasing period). During the fuel processor temperature increasing period, calories of the cooling water heated is adjusted by the cooling water heater 25 so that the temperature of the fuel cell 1 is kept at approximately 70°C equal to the operating temperature for power generation. In the fuel cell 1 kept at approximately 70°C, since the dew point temperature of the humidified feed gas confined within the fuel gas passage 12B is not lower than 70°C as described above, the steam contained in the humidified feed gas is condensed into water. In the fuel cell 1, this water can keep the wet state of the polymer electrolyte membrane. Consequently, it is possible to inhibit the polymer electrolyte membrane from drying during the fuel processor temperature increasing period.

Subsequently, with the humidified feed gas confined within the fuel cell 1, the temperature of the fuel processor 2 is increased by heat from the burner 8. In this case, the passage switch 15 is switched to form the second passage B extending through the pipe 11 to reach the pipe 13 through the bypass pipe 16, and the valve 14 of the pipe 13 is kept closed. And, water is supplied from the water supply device 3 to the fuel processor 2 through the pipe 3a, and the feed gas is supplied from the material feed device 4 to the fuel processor 2 through the pipe 4a.

Within the fuel processor 2, since the temperature is relatively lower in an initial stage, the water is not evaporated into steam but kept in a liquid state. For this reason, in the initial stage, the feed gas flows within the fuel processor 2, but water does not. Further, the feed gas flows through the pipe 11 and the bypass pipe 16, and is supplied to the burner 8 through the pipe 13. The feed gas is combusted in the burner 8 . This increases the temperature of the fuel processor 2. In addition, the flow of the feed gas enables purging for the fuel processor 2, the pipe 11, the bypass 16, and the pipe 13.

When the temperature of the fuel processor 2 is increased up to 100°C or higher, the water supplied to the fuel processor 2 is evaporated into the steam. If the temperature of the fuel processor 2 is outside the range in which the reforming reaction occurs, the steam is mixed with the feed gas and the humidified feed gas is thereby generated. The humidified feed gas is sent to the burner 8 through the pipe 11, the bypass pipe 16, and the pipe 13 and combusted therein. On the other hand, when the temperature of the fuel processor 2 becomes higher, the steam and the feed gas are used in the reforming reaction. Thereby, hydrogen-rich gas is generated.

The temperature of the fuel processor 2 is increased to a value at which the reforming reaction occurs efficiently and stably, for example, approximately 700°C. In this case, the amount of the feed gas to be supplied from the material feed device 4 is adjusted so that the temperature of the fuel processor 2 becomes approximately 700°C. Also, the amount of water supplied from the water supply device 3 is adjusted so that the water contains hydrogen atoms about five to six times as many as carbon atoms contained in the feed gas for the purpose of increasing a ratio of hydrogen contained in the fuel gas generated in the fuel processor 2.

Subsequently, when the fuel processor 2 becomes stable at approximately 700°C, and a CO concentration of the generated fuel gas becomes 20ppm or lower, the valve 14 is opened. And, the passage switch 15 is switched to form the first passage A extending from the fuel processor 2 to the fuel cell 1 through the pipe 11. Thereby, the fuel gas generated within the fuel processor 2 is supplied to the fuel cell 1 through the pipe 11. This fuel gas causes the humidified feed gas confined within the fuel gas passage 12B of the fuel cell 1 and the pipe 13 to be driven out therefrom and sent to the burner 8 through the pipe 13. Also, the fuel gas is sent to the burner 8 through the pipe 13 while driving out the humidified feed gas. The humidified feed gas and the fuel gas sent to the burner 8 are consumed for combustion.

After the fuel gas has sufficiently replaced the confined humidified feed gas, air is supplied from the blower 6 to the fuel cell 1 through the pipe 6a. And, the cooling water heater 25 is stopped, and the cooling water passage switch 26 is switched so that the cooling water discharged from the fuel cell 1 is sent to the heat radiator 10 rather than the bypass pipe 24. Thereby, power generation is carried out in the fuel cell 1 as in the first embodiment.

As should be appreciated from the foregoing, since the fuel cell power generation system of this embodiment is operated as in the first embodiment during the stop operation of the system, the effects produced in the first embodiment are also obtained in this embodiment. In addition, since the humidified feed gas is confined within the fuel gas passage 12B of the fuel cell 1 during the fuel processor temperature increasing period in the start operation of the system, it is possible to inhibit the polymer electrolyte membrane of the fuel cell 1 from drying during this period. Consequently, durability of the fuel cell 1 can be improved. Further, since the humidified feed gas is supplied to the fuel cell 1 after the temperature of the fuel cell 1 is increased up to approximately 70°C, the humidified feed gas is inhibited from being partially condensed depending on the temperature of the fuel cell 1. This makes it possible to keep the humidified state within the fuel cell 1 stable before power generation.

Further, in this embodiment, the temperature of the fuel cell 1 is increased by heating by the cooling water heater 25 independently of the fuel processor 2, rather than the use of the humidified feed gas supplied from the fuel processor 2, and the humidified feed gas supplied to the fuel cell 1 is generated by the humidified gas generator 20 independently of the fuel processor 2, unlike in the first embodiment. So, it is not necessary to keep the fuel processor 2 at 200°C to increase the temperature of the fuel cell 1 or to generate the humidified feed gas, unlike in the first embodiment. Consequently, it is possible to increase the temperature of the fuel processor 2 and the temperature of the fuel cell 1 separately, efficiently, and quickly to desired values, and thereby start the system quickly.

It should be appreciated that the stop operation of the system in this embodiment is similar to that described in the first embodiment. However, typically, during the stopped state of the fuel cell 1, air may enter the interior of the fuel cell 1. Therefore, the start operation of the system in this embodiment is helpful in inhibiting the polymer electrolyte membrane of the fuel cell 1 from drying, regardless of the stop operation of the fuel cell 1.

### (Embodiment 4)

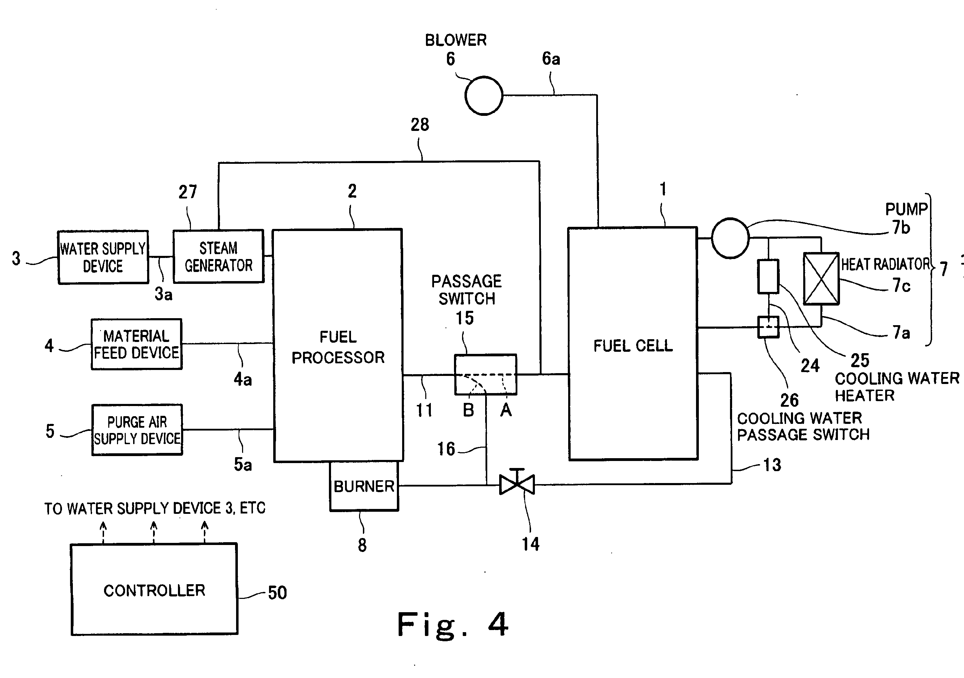

Fig. 4 is a schematic view showing a construction of a fuel cell power generation system according to a fourth embodiment of the present invention. Turning to Fig. 4, the system of this embodiment differs from that of the third embodiment in the following respect.

In the third embodiment, in the humidified gas generator 20, the steam and the feed gas are mixed with each other and generated into the humidified feed gas, while in the fourth embodiment, a steam is generated in a steam generator 27, and the steam is mixed with the feed gas that has passed through the fuel processor 2 within the fuel cell 1 and generated into the humidified feed gas.

To this end, in the system of this embodiment, the steam generator 27 is provided in the pipe 3a and connected to a portion of the pipe 11 which is located downstream of the passage switch 15 in the flow of the fuel gas through a pipe 28. The steam generator 27 is provided with a heater to heat the generator 27.

The power generation operation and the stop operation of the system so constructed are identical to those of the third embodiment. Here, during the power generation operation and the stop operation, the steam generator 27 is stopped.

Meanwhile, during start operation of the system, the temperature of the fuel cell 1 and the temperature of the fuel processor 2 are increased in the manner described below. As in the third embodiment, here it is assumed that the temperature of the fuel cell 1 is first increased and then the temperature of the fuel processor 2 is increased. Alternatively, this may be done concurrently or in a reverse order.

The temperature of the fuel cell 1 is increased as in the third embodiment except the following. While the fuel cell 1 is heated by the cooling water heater 25, the steam generator 27 is stopped, and supply of the water from the water supply device 3 to the steam generator 27 is stopped. When the temperature of the fuel cell 1 becomes approximately 70°C, the steam generator 27 starts to be operated. And, water is supplied from the water supply device 3 to the steam generator 27 through the pipe 3a, and the feed gas is supplied from the material feed device 4 to the fuel processor 2 through the pipe 4a. Within the steam generator 27, the water is heated and evaporated into the steam, which is sent to the pipe 11 through the pipe 28. Meanwhile, the feed gas supplied to the fuel processor 2 is sent to the pipe 11, and mixed with the steam supplied through the pipe 28 at a position downstream of the point where the pipe 11 is connected to the pipe 28. As in the third embodiment, the dew point temperature of the humidified feed gas generated by mixing the steam and the feed gas is set. For example, here it is assumed that the water is supplied from the water supply device 3 to the steam generator 27 at a flow rate of 3.6g/min or higher relative to the flow rate 10L/min of the feed gas supplied from the material feed device 4 to the fuel processor 2 so that the dew point temperature of the humidified feed gas becomes 70°C or higher.

The humidified feed gas so generated is sent to the fuel cell 1 through the pipe 11. The following operation to confine the humidified feed gas within the fuel cell 1 is performed as in the third embodiment. Thus, after the temperature of the fuel cell 1 is increased and the humidified feed gas is confined within the fuel cell 1, the temperature of the fuel processor 2 is increased. The operation to increase the temperature of the fuel processor 2 is performed as in the third embodiment.

In the system of this embodiment, since the humidified feed gas to be supplied to the fuel cell 1 is generated by using the steam generator 27, effects produced by the third embodiment are also obtained in this embodiment.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure instead may be varied and all their modifications which come within the scope of the appended claims are reserved.

## Claims

1. A fuel cell power generation system comprising:
a fuel processor configured to reform a material into a fuel gas containing hydrogen using water and a reforming catalyst;
a fuel cell configured to generate an electric power using an oxidizing gas and the fuel gas;
a burner configured to combust the fuel gas remaining unconsumed within said fuel cell to heat said fuel processor;
a fuel gas passage connected to said fuel processor, said fuel cell, and said burner;
a water supply device configured to supply the water to said fuel processor;
a material feed device configured to feed the material to said fuel processor;
a purge air supply device configured to supply purge air that purges the fuel gas to said fuel processor, and
a controller that is configured
to control said water supply device such that a first purging is performed using a steam in an interior of said fuel processor and an interior of said fuel cell, then,
to control said water supply device and said purge air supply device such that a second purging is performed using humidified air in the interior of said fuel cell, and
to control said purge air supply device such that a third purging is performed using unhumidified air in the interior of said fuel processor,
during a stop operation of said fuel cell power generation system.

2. The fuel cell power generation system according to Claim 1, wherein said second purging is started at a time point when the steam which is not less than a volume of a gas passage ranging from said fuel processor to said fuel cell is supplied during said first purging.

3. The fuel cell power generation system according to Claim 1, wherein said third purging is performed at a time point when a temperature of said fuel processor becomes not higher than a temperature at which a reforming catalyst within said fuel processor is not degraded by the air supplied to said fuel processor.

4. The fuel cell power generation system according to Claim 1, wherein
said first purging is performed in such a manner that the steam is generated in said fuel processor from the water supplied from the water supply device, and the fuel gas existing within at least said fuel processor is purged from said fuel processor by flowing the steam at least said fuel processor,
said second purging is performed in such a manner that the water and the air are respectively supplied from said water supply device and said purge air supply device to said fuel processor, and mixed to generate the humidified air therein, and the fuel gas existing within said fuel processor, said fuel cell, and said fuel gas passage is purged therefrom by flowing the humidified air within said fuel processor, said fuel cell, and said fuel gas passage, and
said third purging is performed in such a manner that said water supply device is stopped to stop supply of water to said fuel processor and the air is supplied to said fuel processor, and the humidified air existing within the said fuel processor and said fuel gas passage is purged therefrom by flowing the unhumidified air within said fuel processor and said fuel gas passage.

5. The fuel cell power generation system according to Claim 1, wherein said fuel gas passage includes:
a first passage through which said fuel processor is connected to said fuel cell,
a second passage through which said fuel cell is connected to said burner,
a third passage having end portions respectively connected to the first passage and the second passage, the first passage being connected to the second passage through the third passage so as to bypass said fuel cell,
a passage switch configured to switch a fuel cell passage and a fuel cell bypass passage, the fuel cell passage extending from said fuel processor to said fuel cell through the first passage, and the fuel cell bypass passage extending from said fuel processor to said burner through the first passage, the third passage, and the second passage, and
a valve provided in the second passage to be located upstream of a point in a flow of the fuel gas where the second passage is connected to the third passage, wherein
during said third purging, the valve is closed, and the passage switch is switched to form the fuel cell bypass passage to thereby allow the unhumidified air to be supplied from said fuel processor to said burner through the fuel cell bypass passage so as to bypass said fuel cell.

6. The fuel cell power generation system according to Claim 1, wherein a dew point temperature of the humidified air used in said second purging is not lower than an operating temperature of said fuel cell in a power generation state.

7. The fuel cell power generation system according to Claim 4, wherein
said first purging is switched to said second purging, when an amount of the steam generated in said fuel processor becomes not less than a volume of at least a fuel gas passage formed within said fuel processor, and temperature of said fuel processor becomes a temperature at which the catalyst within said fuel processor is not oxidized by the air in said first purging.

8. The fuel cell power generation system according to Claim 4, wherein
said second purging is switched to said third purging, when an amount of the air supplied from said purge air supply device to said fuel processor becomes not less than a total of a volume of a fuel gas passage within said fuel processor and a fuel gas passage within said fuel cell in said second purging.

## Patentansprüche

1. Ein Brennstoffzellenstromerzeugungssystem, umfassend:
einen Brennprozessor, gebildet, um ein Material mit Hilfe von Wasser und einem Reforming-Katalysator in Brenngas mit Wasserstoff umzuformen;
eine Brennstoffzelle, gebildet, um mit Hilfe eines oxidierenden Gases und des Brenngases Strom zu erzeugen;
einen Brenner, gebildet, um das in der besagten Brennstoffzelle unverbrauchte Brenngas zu verbrennen, um den besagten Brennprozessor aufzuheizen;
einen Durchlass für das Brenngas, der mit dem besagten Brennprozessor, der besagten Brennstoffzelle und dem besagten Brenner verbunden ist;
eine Wasserversorgungsvorrichtung, gebildet, um dem besagten Brennprozessor Wasser zuzuführen;
eine Materialzuführungsvorrichtung, gebildet, um dem besagten Brennprozessor Material zuzuführen;
eine Vorrichtung zur Versorgung mit sauberer Luft, gebildet, um dem besagten Brennprozessor saubere Luft zuzuführen, die das Brenngas reinigt; und
eine Steuerungseinrichtung, die gebildet ist, um
die besagte Wasserversorgungsvorrichtung zu steuern, so dass ein erstes Durchspülen ausgeführt wird, indem Wasserdampf im Inneren des besagten Brennprozessors und im Inneren der besagten Brennstoffzelle verwendet wird, dann,
die besagte Wasserversorgungsvorrichtung und die besagte Vorrichtung zur Versorgung mit sauberer Luft zu steuern, so dass ein zweites Durchspülen ausgeführt wird, indem befeuchtete Luft im Inneren der besagten Brennstoffzelle verwendet wird, und
die besagte Vorrichtung zur Versorgung mit sauberer Luft zu steuern, so dass ein drittes Durchspülen ausgeführt wird, indem unbefeuchtete Luft im Inneren des besagten Brennprozessors verwendet wird,
während eines Haltevorgangs des besagten Brennstoffzellenstromerzeugungssystem.

2. Das Brennstoffzellenstromerzeugungssystem nach Anspruch 1, wobei das besagte zweite Durchspülen zu einem Zeitpunkt in Gang gesetzt wird, an dem während des ersten Durchspülens Wasserdampf zugeführt wird, der mindestens so ein Volumen aufweist wie der vom besagten Brennprozessor bis zur besagten Brennstoffzelle reichende Gasdurchlass.

3. Das Brennstoffzellenstromerzeugungssystem nach Anspruch 1, wobei das besagte dritte Durchspülen zu einem Zeitpunkt durchgeführt wird, an dem die Temperatur des besagten Brennprozessors maximal die Temperatur erreicht, bei der ein Reforming-Katalysator innerhalb des besagten Brennprozessors nicht durch die dem besagten Brennprozessor zugeführte Luft abgebaut wird.

4. Das Brennstoffzellenstromerzeugungssystem nach Anspruch 1, wobei das besagte erste Durchspülen so ausgeführt wird, dass der Wasserdampf in dem besagten Brennprozessor durch das von der Wasserversorgungsvorrichtung zugeführte Wasser erzeugt wird, wobei das zumindest im besagten Brennprozessor befindliche Brenngas vom dem besagten Brennprozessor gereinigt wird, indem der Wasserdampf zumindest in dem besagten Brennprozessor strömt,
das besagte zweite Durchspülen so ausgeführt wird, dass das Wasser und die Luft dem besagten Brennprozessor entsprechend aus der Wasserversorgungsvorrichtung und der besagten Vorrichtung zur Versorgung mit sauberer Luft zugeführt und vermischt werden, um darin die befeuchtete Luft zu bilden, wobei sich das in dem besagten Brennprozessor, in der besagten Brennstoffzelle und dem besagten Brenngasdurchlass befindliche Brenngas davon durchspült wird, indem die befeuchtete Luft innerhalb des besagten Brennprozessors, der besagten Brennstoffzelle und dem besagten Brenngasdurchlass fließt, und
das besagte dritte Durchspülen so ausgeführt wird, dass die besagte Wasserversorgungsvorrichtung ausgeschaltet wird, um die Wasservorsorgung des besagten Brennprozessors einzustellen und dem besagten Brennprozessor Luft zuzuführen, wobei die im Inneren des besagten Brennprozessors und im besagten Brenngasdurchlass befindliche befeuchtete Luft davon durchspült wird, indem die unbefeuchtete Luft im Inneren des besagten Brennprozessors und des besagten Brenngasdurchlasses fließt.

5. Das Brennstoffzellenstromerzeugungssystem nach Anspruch 1, wobei der besagte Brenngasdurchlass beinhaltet:
einen ersten Durchlass, durch den der besagte Brennprozessor mit der besagten Brennstoffzelle verbunden ist,
einen zweiten Durchlass, durch den die besagte Brennstoffzelle mit dem besagten Brenner verbunden ist,
einen dritten Durchlass mit Endbereichen, die jeweils mit dem ersten oder zweiten Durchlass verbunden sind, wobei der erste Durchlass durch den dritten Durchlass so mit dem zweiten Durchlass verbunden ist, dass er die besagte Brennstoffzelle umgeht,
einen Durchlassschalter, gebildet, um zwischen dem Brennstoffzelldurchlass und dem Brennstoffzellumgehungsdurchlass zu wechseln, wobei sich der Brennstoffzelldurchlass vom besagten Brennprozessor über den ersten Durchlass zur besagten Brennstoffzelle erstreckt und der Brennstoffzellumgehungsdurchlass vom besagten Brennprozessor über den ersten Durchlass, den dritten Durchlass und den zweiten Durchlass bis zum besagten Brenner erstreckt und
ein Ventil, das im zweiten Durchlass bereitgestellt ist, um sich stromaufwärts eines Punktes im Brenngasstrom zu befinden, wo der zweite Durchgang mit dem dritten Durchlass verbunden ist, wobei
während des besagten dritten Durchspülens das Ventil geschlossen und der Durchlassschalter so gestellt ist, dass er den Brennstoffzellumgehungsdurchlass bildet, um zu veranlassen, dass die unbefeuchtete Luft vom besagten Brennprozessor zum besagten Brenner so durch den Brennstoffzellumgehungsdurchlass strömt, dass sie die besagte Brennstoffzelle umgeht.

6. Das Brennstoffzellenstromerzeugungssystem nach Anspruch 1, wobei die Taupunkttemperatur der beim besagten zweiten Durchspülen verwendeten befeuchteten Luft nicht geringer ist als die Betriebstemperatur der besagten Brennstoffzelle bei der Stromerzeugung.

7. Das Brennstoffzellenstromerzeugungssystem nach Anspruch 4, wobei das besagte erste Durchspülen auf das besagte zweite Durchspülen geschaltet wird, wenn die Menge an in dem besagten Brennprozessor erzeugten Wasserstoff mindestens die Menge eines Brenngasdurchlasses erreicht, gebildet in besagtem Brennprozessor, wobei die Temperatur des besagten Brennprozessors zu der Temperatur wird, bei der der Katalysator innerhalb des besagten Brennprozessors nicht durch die Luft im besagten ersten Durchspülen oxidiert wird.

8. Das Brennstoffzellenstromerzeugungssystem nach Anspruch 4, wobei
das besagte zweite Durchspülen auf das besagte dritte Durchspülen geschaltet wird, wenn die Menge an Luft, die von der Vorrichtung zur Versorgung mit sauberer Luft an den besagten Brennprozessor geliefert wird, die Menge an Volumen des Brenngases im Durchlass innerhalb des besagten Brennprozessors und eines Brenngasdurchlasses innerhalb der besagten Brennstoffzelle im besagten zweiten Durchspülen nicht unterschreitet.

## Revendications

1. Système de génération de puissance de pile à combustible comprenant:
un dispositif de traitement de combustible configuré pour reformer une matière en un gaz combustible contenant de l'hydrogène en utilisant de l'eau et un catalyseur de reformage;
une pile à combustible configurée pour générer une puissance électrique en utilisant un gaz oxydant et le gaz combustible;
un brûleur configuré pour faire subir une combustion au gaz combustible restant non consommé au sein de ladite pile à combustible pour chauffer ledit dispositif de traitement de combustible;
un passage de gaz combustible relié audit dispositif de traitement de combustible, à ladite pile à combustible et audit brûleur;
un dispositif d'alimentation en eau configuré pour fournir l'eau audit dispositif de traitement de combustible;
un dispositif d'amenée de matière configuré pour amener la matière audit dispositif de traitement de combustible;
un dispositif d'alimentation en air de purge configuré pour fournir l'air de purge qui purge le gaz combustible audit dispositif de traitement de combustible, et
une unité de commande qui est configurée
pour commander ledit dispositif d'alimentation en eau de telle sorte qu'une première purge est effectuée en utilisant une vapeur d'eau dans un intérieur dudit dispositif de traitement de combustible et un intérieur de ladite pile de combustible, puis
pour commander ledit dispositif d'alimentation en eau et ledit dispositif d'alimentation en air de purge de telle sorte qu'une deuxième purge est effectuée en utilisant de l'air humidifié dans l'intérieur de ladite pile à combustible, et
pour commander ledit dispositif d'alimentation en air de purge de telle sorte qu'une troisième purge est effectuée en utilisant de l'air non humidifié dans l'intérieur dudit dispositif de traitement de combustible,
pendant une opération d'arrêt dudit système de génération de puissance de pile à combustible.

2. Système de génération de puissance de pile à combustible selon la revendication 1, dans lequel ladite deuxième purge est commencée à un instant où la vapeur d'eau qui n'est pas inférieure à un volume d'un passage de gaz allant dudit dispositif de traitement de combustible à ladite pile au combustible est fournie pendant ladite première purge.

3. Système de génération de puissance de pile à combustible selon la revendication 1, dans lequel ladite troisième purge est effectuée à un instant où une température dudit dispositif de traitement de combustible devient non supérieure à une température à laquelle un catalyseur de reformage au sein dudit dispositif de traitement de combustible n'est pas dégradé par l'air fourni audit dispositif de traitement de combustible.

4. Système de génération de puissance de pile à combustible selon la revendication 1, dans lequel
ladite première purge est effectuée de telle manière que la vapeur d'eau est générée dans ledit dispositif de traitement de combustible à partir de l'eau fournie à partir du dispositif d'alimentation en eau, et le gaz combustible existant au sein d'au moins ledit dispositif de traitement de combustible est purgé dudit dispositif de traitement de combustible en faisant écouler la vapeur d'eau au moins dans ledit dispositif de traitement de combustible,
ladite deuxième purge est effectuée de telle manière que l'eau et l'air sont respectivement fournis à partir dudit dispositif d'alimentation en eau et dudit dispositif d'alimentation en air de purge audit dispositif de traitement de combustible, et mélangés pour générer l'air humidifié à l'intérieur, et le gaz combustible existant au sein dudit dispositif de traitement de combustible, ladite pile à combustible, et ledit passage de gaz combustible en est purgé en faisant écouler l'air humidifié au sein dudit dispositif de traitement de combustible, de ladite pile à combustible et dudit passage du gaz combustible, et
ladite troisième purge est effectuée de telle manière que ledit dispositif d'alimentation en eau est arrêté pour arrêter une alimentation en eau audit dispositif de traitement de combustible et l'air est fourni audit dispositif de traitement de combustible, et l'air humidifié existant au sein dudit dispositif de traitement de combustible et dudit passage de gaz combustible en est purgé en faisant écouler l'air non humidifié au sein dudit dispositif de traitement de combustible et dudit passage de gaz combustible.

5. Système de génération de puissance de pile à combustible selon la revendication 1, dans lequel le passage de gaz combustible comprend:
un premier passage à travers lequel ledit dispositif de traitement de combustible est relié à ladite pile à combustible,
un deuxième passage à travers lequel ladite pile à combustible est reliée audit brûleur,
un troisième passage ayant les portions d'extrémité respectivement reliées au premier passage et au deuxième passage, le premier passage étant relié au deuxième passage à travers le troisième passage de façon à contourner ladite pile à combustible,
un commutateur de passage configuré pour commuter un passage de pile à combustible et un passage de contournement de pile à combustible, le passage de pile à combustible s'étendant dudit dispositif de traitement de combustible à ladite pile à combustible à travers le premier passage, et le passage de contournement de pile à combustible s'étendant dudit dispositif de traitement de combustible audit brûleur à travers le premier passage, le troisième passage et le deuxième passage, et
une soupape disposée dans le deuxième passage pour être située en amont d'un point dans un écoulement du gaz combustible où le deuxième passage est relié au troisième passage, dans lequel
pendant ladite troisième purge, la soupape est fermée, et le commutateur de passage est commuté pour former le passage de contournement de pile à combustible pour permettre ainsi à l'air non humidifié d'être fourni dudit dispositif de traitement de combustible audit brûleur à travers le passage de contournement de pile à combustible de façon à contourner ladite pile à combustible.

6. Système de génération de puissance de pile à combustible selon la revendication 1, dans lequel une température de point de rosée de l'air humidifié utilisé dans ladite deuxième purge n'est pas inférieure à une température de fonctionnement de ladite pile à combustible dans un état de génération de puissance.

7. Système de génération de puissance de pile à combustible selon la revendication 4, dans lequel
ladite première purge est commutée à ladite deuxième purge, lorsqu'une quantité de la vapeur d'eau générée dans ledit dispositif de traitement de combustible devient non inférieure à un volume d'au moins un passage de gaz combustible formé au sein dudit dispositif de traitement de combustible, et la température dudit dispositif de traitement de combustible devient une température à laquelle le catalyseur au sein dudit dispositif de traitement de combustible n'est pas oxydé par l'air dans ladite première purge.

8. Système de génération de puissance de pile à combustible selon la revendication 4, dans lequel
ladite deuxième purge est commutée à ladite troisième purge, lorsqu'une quantité de l'air fourni à partir dudit dispositif d'alimentation en air de purge audit dispositif de traitement de combustible devient non inférieure à un total d'un volume d'un passage de gaz combustible au sein dudit dispositif de traitement de combustible et un passage de gaz combustible au sein de ladite pile à combustible dans ladite deuxième purge.
